# EUROPÄISCHE PATENTSCHRIFT

(11) **EP 0 543 054 B1**
(45) Veröffentlichungstag und Bekanntmachung des Hinweises auf die Patenterteilung: **22.02.1995**
(21) Anmeldenummer: 91119972.7
(22) Anmeldetag: 22.11.1991
(51) Int. Cl.: G01F 1/60

(54) **Vorrichtung zur Messung der Stärke des Stroms einer elektrische Ladungen enthaltenden Flüssigkeit**
Device to measure the flow rate of a fluid containing electrical charges
Dispositif de mesure du débit d'un fluide contenant des charges électriques

(43) Veröffentlichungstag der Anmeldung: 26.05.1993
(73) Patentinhaber: Fischer & Porter GmbH, D-37079 Göttingen (DE)
(72) Erfinder: Kiene, Wilfried, W-3510 Münden (DE); Nissen, Peter, Dr., W-3405 Rosdorf (DE)
(74) Vertreter: Fincke, Karl Theodor, Dipl.-Phys. Dr.

(56) Entgegenhaltungen:
- DE-A- 2 743 954
- DE-B- 2 240 054
- GB-A- 2 183 943
- PATENT ABSTRACTS OF JAPAN vol. 7, no. 130 (P-202)7. Juni 1983 & JP-A-58 047 214

## Beschreibung

Die Erfindung betrifft eine Vorrichtung gemäß Oberbegriff des Anspruchs 1.

Nach der DE-OS 27 43 954 ist es bekannt, einen Elektromagneten mittels einer solchen Schaltungsanordnung abzuschalten oder in seiner Polarität umzuschalten, um das Magnetfeld im Rohrstück zu ändern und damit aus den von den Elektroden abgegebenen Signalen eine Korrekturfunktion zu bilden, mittels der es möglich ist, ein von dem Strömungsprofil des Flüssigkeitsstroms im Rohrstück weitgehend unabhängiges, der Stärke des Flüssigkeitsstroms entsprechendes Ausgangssignal zu erzeugen.

Nach der EP-0451 308 A1 ist eine ähnliche Schaltungsanordnung für ein Rohrstück bekannt, in dem sich zwei Paare von Elektroden befinden, mittels denen der Pegel der Flüssigkeit im Rohrstück erfaßbar ist und durch die Korrekturfunktion ein von dem Strömungsprofil des Flüssigkeitsstroms im Rohrstück und/oder den Pegel der Flüssigkeit im Rohrstück weitgehend unabhängiges Ausgangssignal zu gewinnen ist.

Aufgabe der Erfindung ist es, eine Vorrichtung der eingangs genannter Art anzugeben, die besonders einfach ist und durch eine entsprechende Einstellung eine höherparametrige Korrekturfunktion zu bilden gestattet.

Zur Lösung dieser Aufgabe ist die Vorrichtung gemäß Ansprüchen 1 2 ausgeführt.

Die Parallelschaltung einer Stromsenke ist in schaltungstechnisch sehr einfacher Weise auszuführen und außerdem ist eine Stromsenke sehr einfach zur Bildung unterschiedlicher Korrekturfunktionen einzustellen, so daß die Stromsenke auch von der Korrekturschaltung zu steuern ist. Um in dem Elektromagneten einen Wechselstrom zu erzeugen, kann die Stromquelle im einfachsten Fall eine Wechselstromquelle sein. Es kann aber auch eine Gleichstromquelle verwendet werden und zwischen der Gleichstromquelle und dem Elektromagneten ein von dem Taktgeber gesteuerter Umpol- und/oder Abschalter liegen, so daß sich an den Elektroden keine unerwünschten Polarisationspotentiale bilden.

Die Erfindung wird im folgenden an einem Ausführungsbeispiel unter Hinweis auf die beigefügten Zeichnungen erläutert.

Fig. 1 zeigt schematisch ein Blockschaltbild der Schaltungsanordnung.

Fig. 2 zeigt den Stromverlauf durch die beiden Elektromagneten in der Schaltungsanordnung der Fig. 1 bei gesteuerter Stromsenke, wenn die beiden Elektromagneten gleichsinnig mit Unterbrechungen erregt sind.

Fig. 3 zeigt den Stromverlauf durch die Elektromagneten, wenn die Elektromagneten im Wechsel gegensinnig, aber untereinander gleichsinnig, erregt sind.

Die Fig. 4 und 5 zeigen zwei verschiedene Fälle des Stromverlaufs durch den Elektromagneten, dem die Stromsenke parallelgeschaltet ist, bei zwei verschiedenen Strömungsprofilen oder -pegeln im Rohrstück.

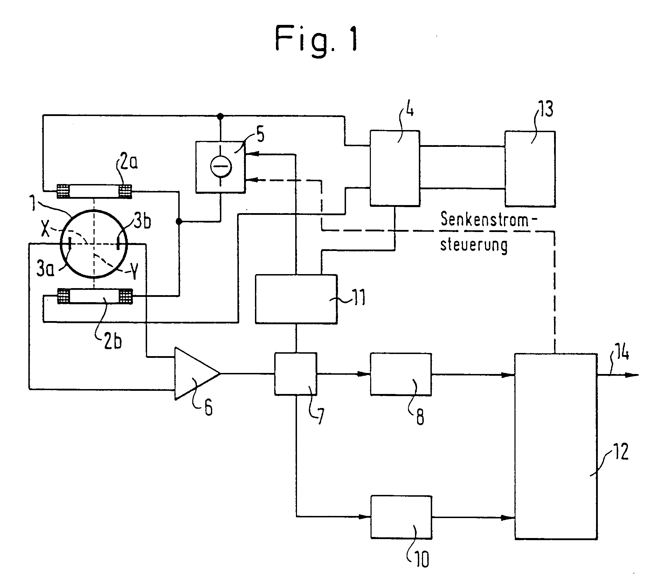

Fig. 1 zeigt ein Rohrstück 1, das wenigstens innenseitig aus elektrisch isolierendem Material besteht und zwei Elektromagneten 2a, 2b zur Erzeugung eines das Rohrstück 1 im wesentlichen diametral um eine mittlere Verbindungslinie Y durchsetzenden Magnetfelds. Zwei von Ladungsverschiebungen in der Flüssigkeit beeinflußte Elektroden 3a und 3b liegen derart, daß ihre mittlere Verbindungslinie X den Flüssigkeitsstrom im wesentlichen diametral rechtwinklig zur mittleren Verbindungslinie Y zwischen den Magneten 2a und 2b durchsetzt.

Die Elektromagneten 2a, 2b sind in Serie über einen Umpol- und/oder Abschalter 4 an eine Gleichstromquelle 13 angeschlossen. Parallel zu dem Elektromagneten 2a ist eine Stromsenke 5 geschaltet.

Die von den Elektroden 3a und 3b abgegebenen Signale werden über einen Signalverstärker 6 einer Signalweiche 7 zugeführt, die diese Signale entsprechend einem von einem Taktgeber 11 abgegebenen Takt einem ersten Signalspeicher 8 oder einem zweiten Signalspeicher 10 zuführt. Die in dem Signalspeicher 8, 10 gespeicherten Signale gelangen in eine Korrekturshaltung 12, die das eingangs beschriebene Ausgangssignal über eine Leitung 14 abgibt.

Der Taktgeber 11 und die Korrekturschaltung 12 steuern die Stromsenke. Der Taktgeber 11 steuert außerdem den Umpol- und/oder Abschalter 4.

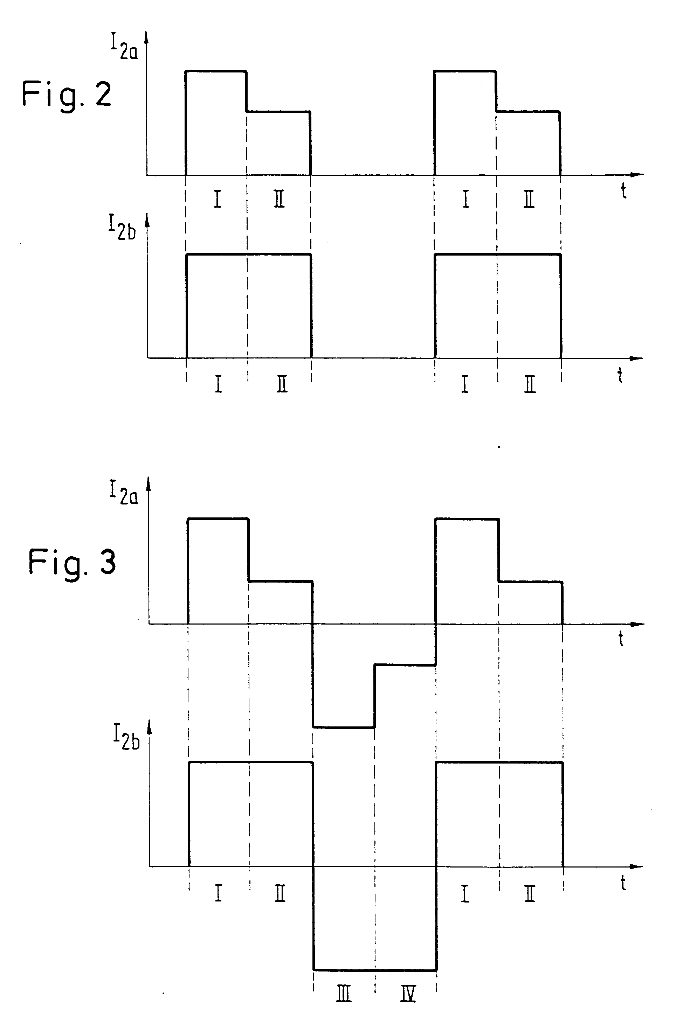

Mittels der Stromsenke 5 wird der Strom durch den Elektromagneten 2a, wenn dieser Elektromagnet 2a durch einen Strom I2a erregt ist, zu einem bestimmten Zeitpunkt der Erregung herabgesetzt. Dies ist in Fig. 2 und 3 für die Zeitabschnitte I und II angedeutet. Das Maß der Herabsetzung hängt von dem Signal ab, das die Stromsenke 5 von der Korrekturschaltung 12 erhält. So zeigt Fig. 2 den Fall, daß das Strömungsprofil im Rohrstück 1 ungestört ist und daß das Rohrstück 1 vollständig von dem Flüssigkeitsstrom durchflossen wird, und Fig. 3 den Fall, daß das Strömungsprofil im Rohrstück 1 gestört ist und/oder daß die Flüssigkeit das Rohrstück 1 nicht ganz füllt.

Fig. 2 zeigt den Strom I2a und I2b durch die beiden Elektromagneten 2a und 2b in Abhängigkeit von der Zeit t bei synchroner, gleichsinniger Impulserregung. In den Zeitabschnitten I ist die Stromsenke 5 nicht wirksam. In den Zeitabschnitten II ist die Stromsenke 5 wirksam.

Fig. 3 zeigt den Strom I2a und I2b durch die beiden Elektromagneten 2a und 2b in Abhängigkeit von der Zeit t bei synchroner, gleichsinniger Wechselimpulserregung. In den Zeitabschnitten I und III ist die Stromsenke 5 nicht wirksam. In den Zeitabschnitten II und IV ist die Stromsenke 5 wirksam.

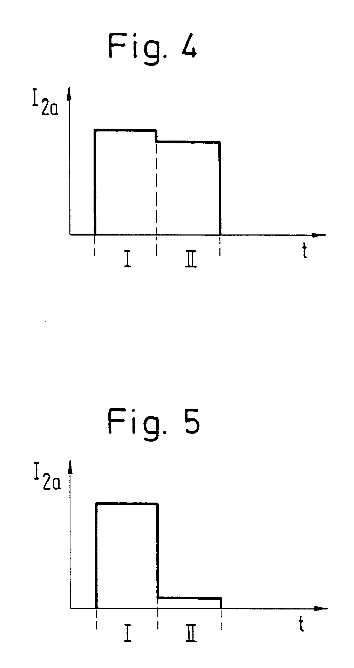

Fig. 4 zeigt in Abhängigkeit von der Zeit t den Strom I2a durch den Elektromagneten 2a bei ungestörtem Strömungsprofil im Rohrstück 1 und vollständiger Füllung des Rohrstücks 1 in den Zeitabschnitten I und II.

Fig. 5 zeigt den Strom I2a bei gestörtem Strömungsprofil im Rohrstück und/oder teilgefülltem Rohrstück 1.

Innerhalb der Zeitabschnitte I + II wird also die Struktur des Magnetfelds im Rohrstück 1 geändert, um der Korrekturschaltung 12 unterschiedliche Signale zur Bildung der Korrekturfunktion zuführen zu können.

Liegt beispielsweise kein gestörtes Strömungsprofil vor, so kann die Absenkung des Stroms durch den Elektromagneten 2a vergleichsweise gering sein, gerade ausreichend, um im zeitlichen Verlauf eine Änderung des Strömungsprofils erkennen zu können. Eine Auswerteschaltung, der die Spannung zwischen den Elektroden 3a und 3b zugeführt wird, erhält dann während der Zeitspannen I und II verhältnismäßig hohe Spannungen, welche zur Erzielung einer hohen Meßgenauigkeit anzustreben sind. Entsprechend der Größe der Störung des Strömungsprofils wird das Maß der Absenkung des Stroms durch den Elektromagneten 2a mittels der Stromsenke 5 gesteuert, wobei also eine starke Änderung des Strömungsprofils einer starken Absenkung des Stroms I2a entspricht.

## Patentansprüche

1. Vorrichtung zur Messung der Stärke des Stroms einer ein Rohrstück (1) durchströmenden, elektrische Ladungen enthaltenden Flüssigkeit,
mit wenigstens zwei Elektromagneten (2a, 2b) zur Erzeugung von den Strom im Rohrstück (1) durchsetzenden Magnetfeldimpulsen,
mit einer Gleichstromquelle (13) und einem von einem Taktgeber (11) gesteuerten Umpol- und Abschalter (4) zur periodischen Erregung der Elektromagneten (2a, 2b) mit Gleichstromimpulsen (I + II; III + IV),
mit wenigstens zwei von Ladungsverschiebungen in dem Flüssigkeitsstrom beeinflußten, der Abnahme von Meßspannungsimpulsen dienenden Elektroden (3a, 3b), deren mittlere Verbindungslinie (X) den Flüssigkeitsstrom im Bereich des Magnetfelds durchsetzt,
mit einer von dem Taktgeber (11) entsprechend den Gleichstromimpulsen gesteuerten Signalweiche (7), die zwischen die Elektroden (3a, 3b) und wenigstens zwei Signalspeicher (8, 10) geschaltet ist,
und mit einer an die Signalspeicher (8, 10) angeschlossenen Korrekturschaltung (12), die aus den in den Signalspeichern (8, 10) gespeicherten Signalen ein von Störungen des Strömungsprofils des Flüssigkeitsstroms im Rohrstück (1) und/oder von Änderungen des Pegels der Flüssigkeit im Rohrstück (1) nur beschränkt abhängiges, der Stärke des Flüssigkeitsstroms entsprechendes Ausgangssignal erzeugt,
**dadurch gekennzeichnet**,
daß parallel zu einem (2a) der Elektromagneten (2a, 2b) eine von dem Taktgeber (11) gesteuerte Stromsenke (5) geschaltet ist und daß diese Stromsenke (5) überdies von der Korrekturschaltung (12) derart gesteuert ist, daß die Stromstärke (I₂ₐ) der diesem Elektromagneten (2a) zugeführten Gleichstromimpulse (I + II; III + IV) in einem Abschnitt (II; IV) der Gleichstromimpulse (I + II; III + IV) um ein Maß abgesenkt wird, das mit zunehmenden, in ihrem zeitlichen Verlauf von der Korrekturschaltung (12) erfaßten Störungen des Strömungsprofils im Rohrstück (1) oder Änderungen des Pegels der Flüssigkeit im Rohrstück (1) zunimmt.

2. Vorrichtung nach Anspruch 1, wobei die Gleichstromquelle (13) samt Umpol- und Abschalter (4) durch eine Wechselstromquelle ersetzt ist.

## Claims

1. An apparatus for measuring the strength of the flow of an electrically charged fluid flowing through a tube section (1), comprising at least two electromagnets (2a, 2b) for producing magnetic field pulses penetrating the flow in the tube section (1),
comprising a direct current source (13) and a reversing and disconnecting switch (4), controlled by a clock generator (11), for the periodic excitation of the electromagnets (2a, 2b) by means of direct current pulses (I + II; III + IV)
comprising at least two electrodes (3a, 3b) which are influenced by charge displacements in the flow of the fluid and serve to pick up measuring voltage pulses, the central connecting line (X) of said electrodes passing through the flow of the fluid within the region of the magnetic field,
comprising a signal filter (7) which is controlled by the clock generator according to the direct pulses, said signal filter being connected between the electrodes (3a, 3b) and at least two signals stores (8, 10),
and comprising a correction circuit (12) which is connected to the signal stores (8, 10), said correction circuit producing an output signal which is, only to a limited extent, dependent on disturbances in the flow profile of the stream of fluid in the tube section (1), and/or on changes in the level of the fluid in the tube section (1), and which corresponds to the strength of the flow of fluid, characterised in that a current drain (5) which is controlled by the clock generator (11) is connected in parallel to one (2a) of the electromagnets (2a, 2b), and in that this current drain (5) is,
moreover, controlled by the correction circuit (12) such that the current strength (I₂ₐ) of the direct current pulses (I + II; III + IV) supplied to said electromagnet (2a) decreases in a part (II; IV) of the direct current pulses (I + II; III + IV) by an amount which increases as the disturbances in the flow profile in the tube section (1) or changes in the fluid level in the tube section (1) increase, the time characteristicS of said disturbances or changes being detected by the correction circuit (12).

2. An apparatus according to claim 1, in which the direct current source (13), together with the reversing and disconnecting switch (4), is replaced by an alternating current source.

## Revendications

1. Dispositif pour mesurer le débit d'un fluide contenant des charges électriques et passant par une section de tube (1), comprenant au moins deux électrodes (2a, 2b) pour produire des impulsions de champ magnétique qui traversent le courant passant par la section de tube (1), une source de courant continu (13) et un inverseur de polarité et/ou un interrupteur (4) commandé par un générateur d'horloge (11) pour exciter périodiquement les électroaimants (2a, 2b) avec des impulsions en courant continu (I + II; III + IV), au moins deux électrodes (3a, 3b) soumises à l'influence de modifications de la charge dans le courant de fluide et servant à la détection d'impulsions de tension de mesure, électrodes dont la ligne de liaison centrale X traverse le courant de fluide dans la région du champ magnétique, un dispositif d'aiguillage de signaux (7) commandé par le générateur d'horloge (11) en fonction des impulsions en courant continu et monté entre les électrodes (3a, 3b) et au moins deux mémoires à signaux (8, 10), et un circuit de correction (12) raccordé aux mémoires à signaux (8, 10), qui produit à partir des signaux emmagasinés dans les mémoires à signaux (8, 10) un signal de sortie correspondant à l'importance du débit du fluide et ne dépendant que de façon limitée des perturbations du profil d'écoulement du courant de fluide dans la section de tube (1) et/ou de modifications du niveau du fluide dans la section de tube (1),
caractérisé en ce que parallèlement à l'un (2a) des électroaimants (2a, 2b) est monté un dispositif abaisseur de courant (5) commandé par le générateur d'horloge (11), et en ce que ce dispositif abaisseur de courant (5) est commandé en outre par le circuit de correction (12) de manière que l'intensité du courant (I₂ₐ) des impulsions en courant continu (I + II; III + IV) appliquées à cet électroaimant (2a) soit abaissée au cours d'une section (II; IV) des impulsions en courant continu (I + II; III + IV) d'une mesure qui augmente à mesure qu'augmentent les perturbations du profil d'écoulement dans la section de tube (1) ou les modifications du niveau du fluide dans la section de tube (1) détectées par le circuit de correction (12) au cours de leur variation dans le temps.

2. Dispositif selon la revendication 1, dans lequel la source de courant continu (13) ainsi que l'inverseur de polarité et interrupteur (4) sont remplacés par une source de courant alternatif.
